# EUROPEAN PATENT APPLICATION

(11) **EP 1 919 172 A2**
(43) Date of publication of application: **07.05.2008**
(21) Application number: 07021127.1
(22) Date of filing: 29.10.2007
(51) Int. Cl.: H04M 1/02

(54) **Portable information terminal comprising a display with portrait and landscape orientations**

(30) Priority: 30.10.2006 JP 2006294434
(71) Applicant: Sharp Kabushiki Kaisha, Osaka-shi, Osaka 545-8522 (JP)
(72) Inventor: Kimura, Kenji, Higashihiroshima-shi Hiroshima 739-0042 (JP)
(74) Representative: Müller - Hoffmann & Partner

(57) **Abstract**

A portable telephone is provided that allows change of image pick-up mode of an image on a display, with the display being in at least one of portrait orientation and landscape orientation. A portable information terminal (1) includes a camera unit (20), an image processing controller (50) configured to display an image that is being picked-up by a camera on a display screen of an LCD unit (30), and a key operation portion (54) configured to give an instruction to have the image displayed with a first aspect ratio or a second aspect ratio. Image processing controller (50) changes the aspect ratio of the image, in response to an instruction from the key operation portion (54) to change the aspect ratio.

## Description

This nonprovisional application is based on Japanese Patent Application No. 2006-294434 filed with the Japan Patent Office on October 30, 2006, the entire contents of which are hereby incorporated by reference.

### BACKGROUND OF THE INVENTION

### Field of the Invention

The present invention relates to a portable information terminal. Specifically, the present invention relates to a portable information terminal with a camera and a display panel rotating mechanism.

### Description of the Background Art

Recently, portable telephones come to have various and many functions. For instance, a portable telephone with a camera has been known, of which display panel can be rotated to a portrait or landscape orientation.

By way of example, Japanese Patent Laying-Open Nos. 2003-319043 and 2004-356975 disclose portable telephones consisting of upper and lower units.

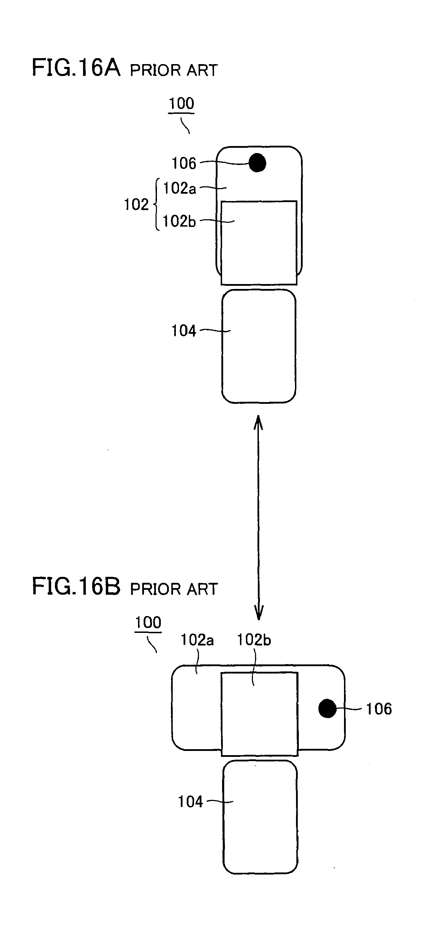

Figs. 16A and 16B are schematic rear views showing the configuration of portable telephone disclosed in Japanese Patent Laying-Open No. 2003-319043. Referring to Fig. 16A, a portable information terminal 100 includes an upper unit 102, a lower unit 104 and a camera 106. Upper unit 102 and lower unit 104 are joined in a foldable manner by means of a hinge portion (not shown). Upper unit 102 includes a display unit 102a having a display panel (not shown), and a support unit 102b rotatably supporting display unit 102a.. Camera 106 is attached to display unit 102a.

The display panel of portable information terminal 100 can be set from the portrait display orientation (Fig. 16A) to a landscape display orientation (Fig. 16B), by rotating display unit 102a with respect to support unit 102b. At this time, camera 106 also rotates simultaneously with display unit 102a.

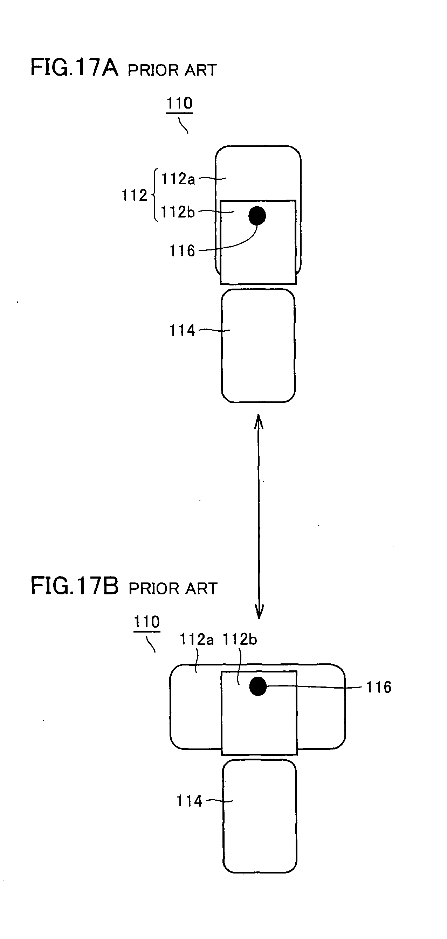

Figs. 17A and 17B are schematic rear views showing a configuration of a portable telephone disclosed in Japanese Patent Laying-Open No. 2004-356975. As shown in Fig. 17A, similar to portable information terminal 100, the display panel (not shown) attached on a display unit 112a of portable information terminal 110 can also be set from the portrait display orientation (Fig. 17A) to the landscape display orientation (Fig. 17B) by rotating display unit 112a with respect to a support unit 112b. At this time, a camera 116 attached on the rotation axis also rotates simultaneously with display unit 112a.

It is desirable in such a portable telephone with a camera to pick-up an image by the camera while viewing the displayed image as a finder image.

The portable telephones disclosed in Japanese Patent Laying-Open Nos. 2003-319043 and 2004-356975 described above have mechanisms that rotate the display panel and the camera simultaneously. Therefore, even when the display panel is rotated, the direction of reading the image obtained by a camera sensor is the same as the direction of scanning when driven for displaying the image.

In a portable telephone not having such a mechanism of rotating the display panel and the camera simultaneously as described above, when an image is picked-up by the camera with the display panel rotated, the direction of reading the image obtained by the camera sensor is not the same as the direction of scanning when driven for displaying the image. Consequently, it becomes difficult to view the displayed image as a finder image.

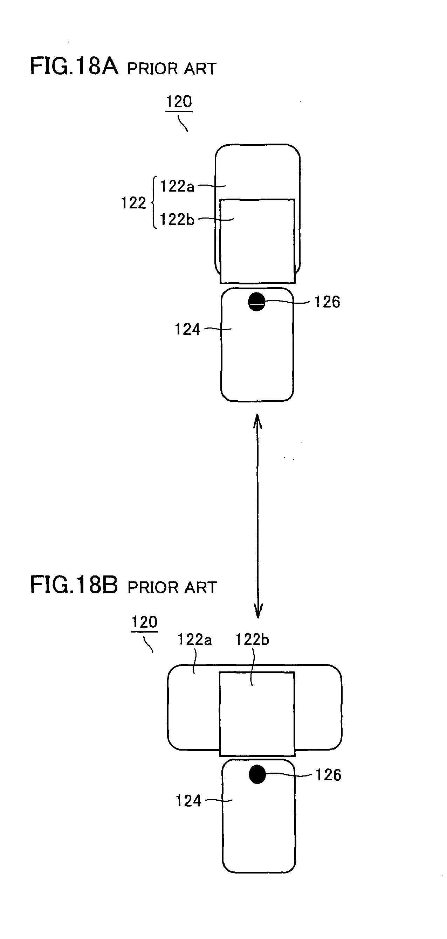

Figs. 18A and 18B are schematic rear views showing a configuration of a portable telephone having a mechanism by which the camera is not rotated when the display panel is rotated. Referring to Fig. 18A, a portable information terminal 120 includes an upper unit 122, a lower unit 124 and a camera 126. Upper unit 122 and lower unit 124 are joined in a foldable manner by means of a hinge portion (not shown). Upper unit 122 includes a display unit 122a having a display panel (not shown), and a support unit 122b rotatably supporting display unit 122a. Camera 106 is attached to lower unit 124.

The display panel of portable information terminal 120 can be set from the portrait display orientation (Fig. 18A) to a landscape display orientation (Fig. 18B), by rotating display unit 122a with respect to support unit 122b. At this time, even when display unit 122a is rotated, camera 126 is fixed on lower unit 124 and is not rotated.

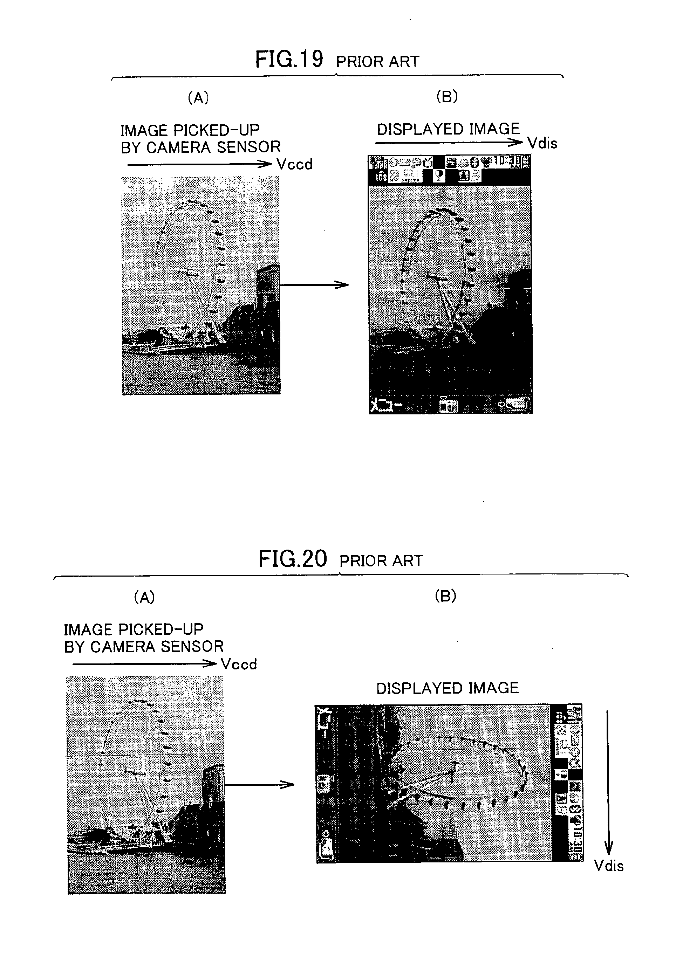

Fig. 19 illustrates a relation between the image picked-up by the camera sensor and the image displayed on the display panel, when the display panel is in the portrait orientation. In the figure, an arrow Vccd represents the direction of reading the image picked-up by the camera sensor, and an arrow Vdis represents the scanning direction for displaying the image.

When the display panel is in the portrait orientation (Fig. 18A), the directions of Vccd and Vdis are both horizontal and the same, and therefore, upward/downward directions of the image picked-up by the camera sensor (image A of Fig. 19) and the displayed image (image B of Fig. 19) are the same.

Fig. 20 illustrates a relation between the image picked-up by the camera sensor and the image displayed on the display panel, when the display panel is in the landscape orientation. When display unit 122a is rotated such that the display panel is set from the portrait orientation (Fig. 18A) to the landscape orientation (Fig. 18E), Vdis comes to correspond to the vertical direction, different from the direction (horizontal direction) of Vccd. As a result, the upward/downward directions of the image picked-up by the camera sensor (image A of Fig. 20) and the displayed image (image B of Fig. 20) are not the same. In such a case, it becomes difficult to view the displayed image as a finder image while images are picked-up by the camera.

### SUMMARY OF THE INVENTION

The present invention was made to solve the above-described problems and its object is to provide a portable telephone allowing a change of image pick-up mode on the display panel, when the display panel is in at least one of the portrait orientation and the landscape orientation.

In order to attain the above-described object, according to an aspect, the present invention provides a portable information terminal including: an image pick-up portion; a first housing on which the image pick-up portion is provided; a display portion configured to display an image being picked-up by the image pick-up portion; a second housing on which the display portion is provided; an image processing controller configured to display the image on a display screen of the display portion; and a display switching portion configured to give an instruction to the image processing controller that in a display area on which the image is displayed of the display screen, the image is displayed with a first aspect ratio or with a second aspect ratio different from the first aspect ratio. The image processing controller changes the image pick-up mode of the image to attain the first aspect ratio or the second aspect ratio, in accordance with an instruction to change the aspect ratio from the display switching portion.

Preferably, the portable information terminal further includes a joint portion configured to join the first housing and the second housing to be opened/closed with each other. The joint portion includes a rotating portion configured to allow the second housing to rotate in a plane vertical to an axis for the opening/closing and horizontal to the display screen, so that the display screen can be set to portrait and landscape orientations. The image processing controller changes the image pick-up mode to attain the first aspect ratio or the second aspect ratio, with the display screen being in at least one of the portrait orientation and the landscape orientation.

Preferably, the first aspect ratio is the aspect ratio of the display screen when the display screen is in the portrait orientation. The second aspect ratio is the aspect ratio of the display screen when the display screen is in the landscape orientation.

Preferably, the portable information terminal further includes a call processing controller configured to realize a call in accordance with an external instruction.

Preferably, the portable information terminal further includes a detecting portion configured to detect transition of the display area from one to the other of the portrait orientation and landscape orientation. The image processing controller rotates the image in response to the detecting portion detecting the transition, and changes display size of the rotated image to attain the aspect ratio displayed on the display area before the transition.

Preferably, the image processing controller determines a range of the image to be displayed on the display area either to a range that attains the first aspect ratio or a range that attains the second aspect ratio.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing an example of a portable information terminal 1 in accordance with an embodiment.
Fig. 2 is a perspective view showing a state in which the housing of portable information terminal 1 is opened.
Fig. 3 is a perspective view showing a second housing 2 of portable information terminal 1 of Fig. 2 in a rotated state.
Fig. 4 is a perspective view showing a second housing 2 of portable information terminal 1 of Fig. 2 in a rotated state.
Fig. 5 is a schematic rear view of portable information terminal 1 of Fig. 2.
Fig. 6 is a schematic rear view of portable information terminal 1 of Fig. 4.
Fig. 7 is a functional block diagram representing functional configuration of portable information terminal 1.
Fig. 8 illustrates scanning direction for reading a digital image from a camera sensor 24 and scanning direction for displaying an image on an LCD.
Figs. 9A and 9B illustrate transition of a displayed image when the display panel is rotated with the pick-up mode set in portrait image pick-up mode.
Figs. 10A and 10B illustrate transition of a displayed image when the display panel is rotated with the pick-up mode set in landscape image pick-up mode.
Fig. 11 is a flowchart representing the flow of an image display process in portable information terminal 1.
Fig. 12 is a flowchart representing the flow of image rotation/reduction or enlargement process.
Fig. 13 is a flowchart representing the process flow when an instruction to change image pick-up mode is applied.
Figs. 14A to 14D show an exemplary transition of the displayed image.
Figs. 15A to 15D show another exemplary transition of the displayed image different from that of Figs. 14A to 14D.
Figs. 16A and 16B are schematic rear views showing a configuration of the portable telephone disclosed in Japanese Patent Laying-Open No. 2003-319043.
Figs. 17A and 17B are schematic rear views showing a configuration of the portable telephone disclosed in Japanese Patent Laying-Open No. 2004-356975.
Fig. 18A and 18B are schematic rear views showing a configuration of the portable telephone having a mechanism by which the camera is not rotated when the display panel is rotated.
Fig. 19 illustrates a relation between the image picked-up by the camera sensor and the image displayed on the display panel, when the display panel is in the portrait orientation.
Fig. 20 illustrates a relation between the image picked-up by the camera sensor and the image displayed on the display panel, when the display panel is in the landscape orientation.

### DESCRIPTION OF THE PREFERRED EMBODIMENTS

In the following, embodiments of the present invention will be described with reference to the figures. In the following description, the same portions are denoted by the same reference characters. Their names and functions are also the same. Therefore, detailed description thereof will not be repeated.

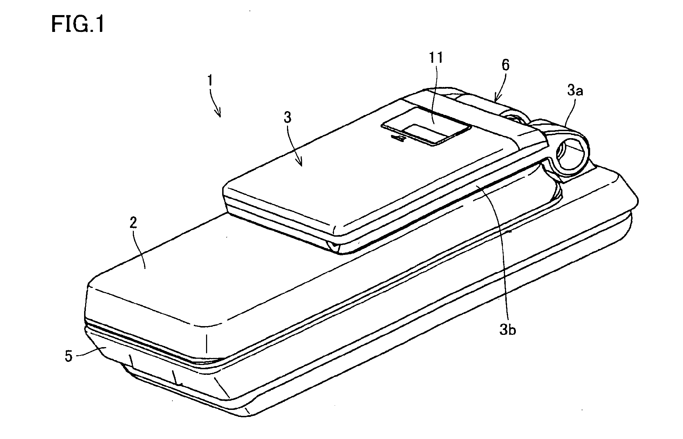

An embodiment of the present invention applied to a portable telephone will be described with reference to the figures. Fig. 1 is a perspective view showing an example of a portable information terminal 1 in accordance with the present embodiment, with the housing closed.

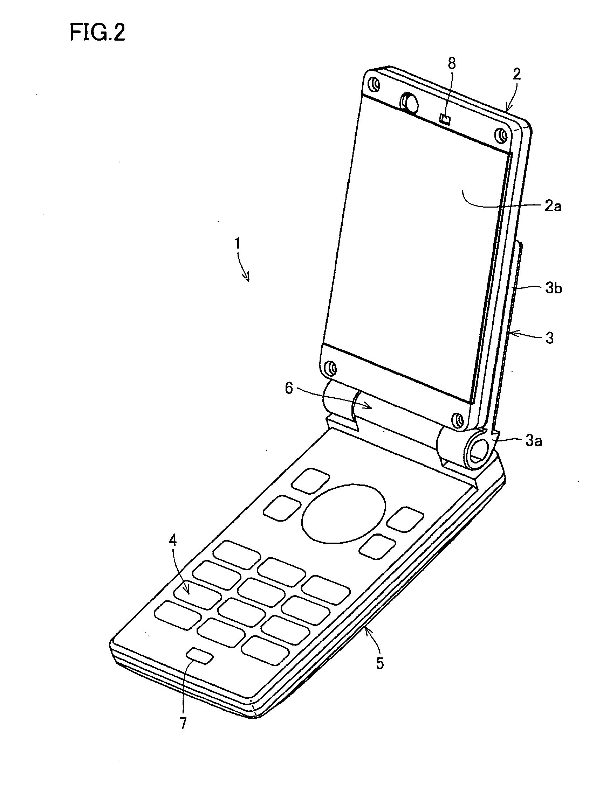

Fig. 2 is a perspective view showing portable information terminal 1 with the housing opened. Referring to Figs. 1 and 2, portable information terminal 1 will be described. Portable information terminal 1 is a so-called foldable portable telephone. First and second housings 5 and 2, each formed to have a rectangular shape, are joined by a hinge portion 3. Portable telephone 1 is foldable with surfaces of the first and second housings 5 and 2 facing with each other.

On first housing 5, a large number of operation keys 4 and a microphone 7 for voice transmission are arranged on an inner surface that faces the second housing 2 in the folded state. Microphone 7 for voice transmission is arranged at an end portion of first housing 5, opposite to hinge portion3. Further, a camera 10 (not shown) is arranged on a surface opposite to the second housing 2.

The second housing 2 has, on an inner surface facing the first housing 5 in the folded state, a main display portion (display panel) 2a and a receiver 8 for call reception. Main display portion 2a is formed to have a rectangular shape, and arranged such that its longitudinal direction is aligned with the longitudinal direction of the second housing 2. Receiver 8 for call reception is arranged on an end portion of the second housing 2 opposite to hinge portion 3.

Portable information terminal 1 as such can be held in a compact, folded state, and when the housings are opened, it is possible to press and operate operation keys while viewing the display on main display portion 2a. Main display portion 2a is formed to have a rectangular shape of which ratio between longer and shorter sides is, for example, 16: 9. When the main display portion 2a is set to the portrait orientation and one places his/her ear close to the inner surface of second housing 2, portable information terminal 1 enables satisfactory call, with one's mouth positioned close to microphone 7 for voice transmission and one's ear positioned close to receiver 8 for call reception.

Hinge portion 3 has such a structure in which a joint 3a rotatable joined to the first housing 5 and a holding portion 3b facing the outer surface of second housing 2 and holding the second housing 2 are integrated. Joint 3 a consists of two cylinders formed protruded, spaced by a prescribed distance from each other, from one end of holding portion 3b. On one end along the longitudinal direction of the inner surface of first housing 5, a cylinder 6 is formed extending in the shorter direction. By positioning cylinder 6 coaxially with the two joints 3a to be assembled rotatable with each other, hinge portion 3 is joined rotatable to first housing 5.

Holding portion 3b is formed as a rectangular plate, which faces approximately half the outer surface of second housing 2 on the side of hinge portion 3, when main display portion 2a is set to the portrait orientation. Holding portion 3b holds the second housing 2 rotatable in a plane horizontal to the main display portion 2a, and the second housing 2 is rotatable with a certain angle of inclination with respect to the first housing 5. On an outer surface of holding portion 3b opposite to the second housing 2, a sub display portion 11 is provided, mainly for giving display with the housings closed.

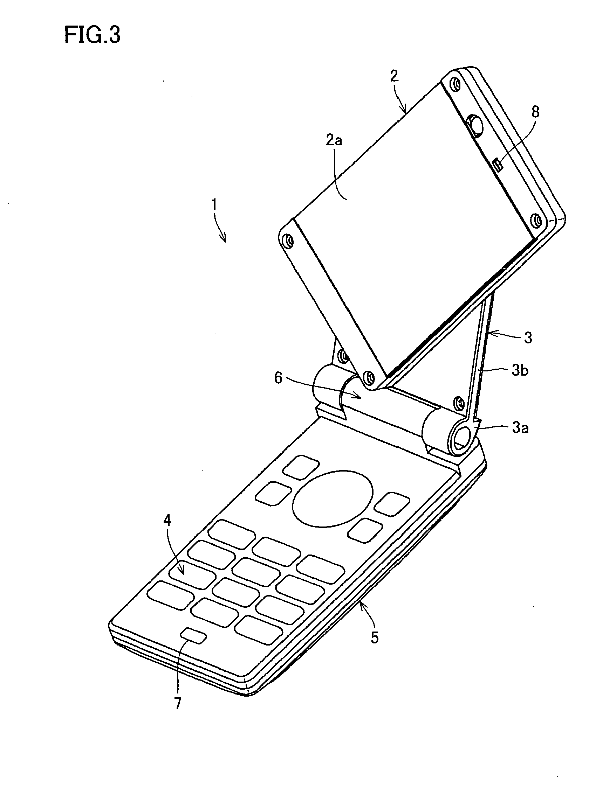

Fig. 3 is a perspective view showing the second housing 2 of portable information terminal 1 in a rotated state. Here, it is rotated clockwise by about 45° from the state of Fig. 2 when viewed from the front side.

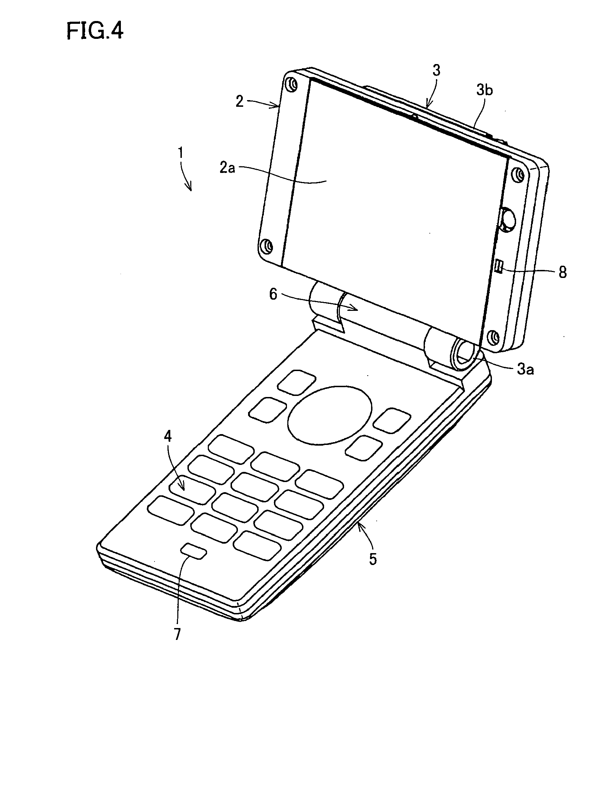

Fig. 4 is a perspective view showing the second housing 2 of portable information terminal 1 in a rotated state. Here, it is rotated clockwise by about 90° from the state of Fig. 2 when viewed from the front side.

Referring to Figs. 3 and 4, the state in which the second housing 2 of portable information terminal 1 is rotated will be described. The user can rotate the second housing 2 between the portrait orientation shown in Fig. 2 and the landscape orientation shown in Fig. 4, by turning the second housing 2 within the angular range of 90° in a plane horizontal to the main display portion 2a, while holding the first housing 5.

When the second housing 2 is rotated clockwise from the state shown in Fig. 2, until the state shown in Fig. 3 is attained, a counterclockwise urging force acts on the second housing 2 by an urging unit (not shown) provided in holding portion 3b of hinge portion 3. Therefore, in the state shown in Fig. 2, because of the counterclockwise urging force acting on housing 2, the second housing 2 is kept in the state of Fig. 2 unless an external force is applied.

When the second housing 2 is further turned clockwise over the state of Fig. 3, the urging force acting on the second housing 2 is switched to clockwise force, and the second housing 2 is locked in the state shown in Fig. 4. Consequently, the second housing 2 is kept in the state of Fig. 4 unless an external force is applied.

In the portable information terminal 1 in accordance with the present embodiment, the second housing 2 is adapted to rotate not about a rotation axis fixed at a constant position but about a rotation axis that moves as the second housing rotates. Therefore, even when the second housing 2 in the portrait orientation with one end in the longitudinal direction positioned close to the first housing 5 is rotated by 90°, one end in the shorter side direction of the second housing is positioned close to the first housing, as shown in Fig. 4.

Further, by the urging force acting on the second housing 2, the second housing can be switched to the portrait orientation or the landscape orientation smooth, while gripping the first housing 5.

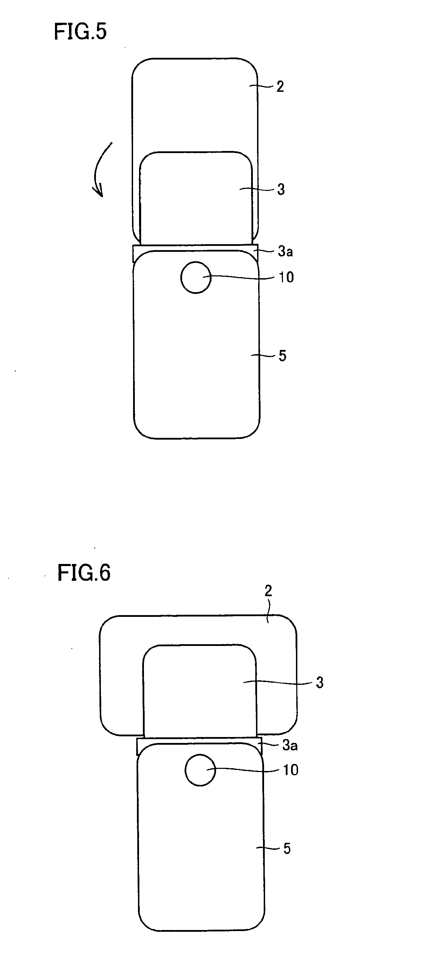

Fig. 5 is a schematic rear view of portable information terminal 1 of Fig. 2, showing portable information terminal 1 of Fig. 2 viewed from the rear side.

Fig. 6 is a schematic rear view of portable information terminal of Fig. 4, showing portable information terminal 1 of Fig. 4 viewed from the rear side.

As shown in Figs. 5 and 6, camera 10 is arranged on the first housing 5, and the mechanism is such that the camera does not rotate even when the first housing 5 rotates. The user can confirm the image picked-up by camera 10 through main display portion 2a serving as a finder.

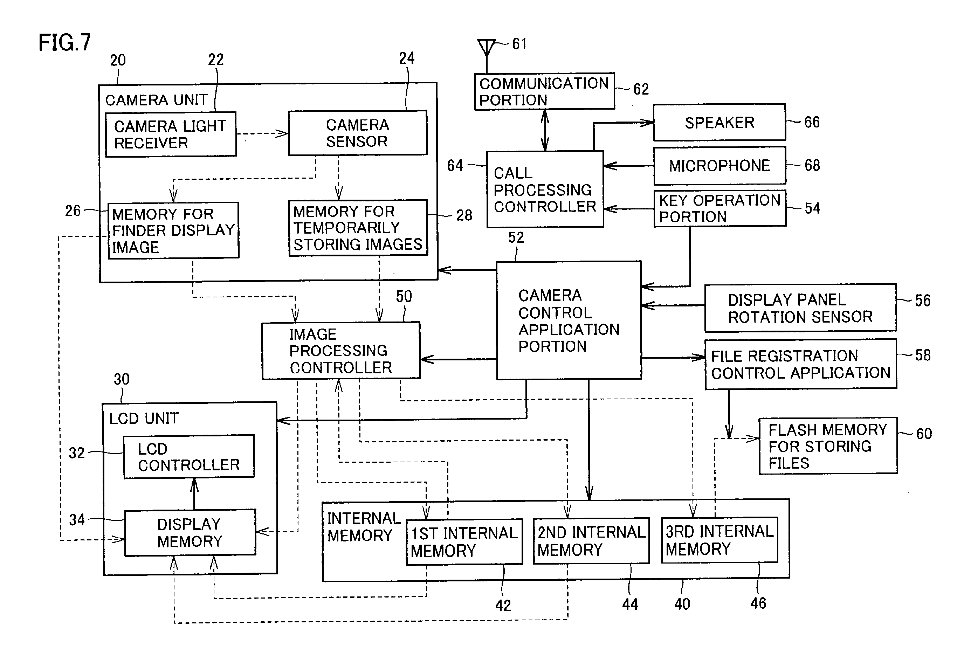

Fig. 7 is a functional block diagram representing a functional configuration of portable information terminal 1. Referring to Fig. 7, the functional configuration of portable information terminal 1 will be described.

Portable information terminal 1 includes a camera unit 20, an LCD (Liquid Crystal Display) unit 30, an internal memory 40, an image processing controller 50, a camera control application portion 52, a key operation portion 54, a display panel rotation sensor 56, a file registration control application 58, a flash memory 60 for storing files, an antenna 61, a communication portion 62 configured to control communication through antenna 61, a call process controller 64 configured to control a call through communication portion 62, a speaker 66 for generating voice or the like and a microphone 68 for transmitting voice or the like.

Camera control application portion 52 represents the application for controlling the camera function of portable information terminal 1. In order to control image pick-up, display of images on LCD, data transfer between memories, and compression and storage of images, it issues instructions to various controllers.

Key operation portion 54 includes a shutter key, a menu operation key, an image pick-up mode switching key, a picked-up image storage instruction key and the like. Through these keys an instruction is given to camera control application portion 52. The "image pick-up mode" instructed by the image pick-up mode switching key includes a mode in which the aspect ratio of the image is longer side to shorter side of main display 2a (referred to as the "portrait image pick-up mode") and a mode in which the aspect ratio of the image is shorter side to longer side (referred to as "landscape image pick-up mode"). By the image pick-up mode switching key, the portrait image pick-up mode and the landscape image pick-up mode can be switched. Preferably, the keys are arranged close to each other to allow operation by one hand.

Key operation portion 54 can also issue an instruction to camera control application portion 52 to enlarge/reduce the size (display size) of the image on the display panel, while maintaining the image pick-up mode.

Display panel rotation sensor 56 detects the portrait orientation, landscape orientation and the state of rotation from one of these orientations to the other, and notifies camera control application portion 52 of the result.

Camera unit 20 includes a camera light receiver 22, a camera sensor 24, a memory 26 for finder display image, and a memory 28 for temporarily storing picked-up images. These are controlled by a camera driver (not shown), receiving an instruction from camera control application portion 52.

Camera light receiver 22 has a lens and receives optical data. Camera sensor 24 converts the optical data output from camera light receiver 22 to a digital image. It is implemented, for example, by a CCD (Charge Coupled Device) or a CMOS (Complementary Metal Oxide Semiconductor). In camera sensor 24, photo-electric converting elements corresponding to pixels are arranged in a matrix of rows and columns. The photo-electric converting element converts photo luminance to an electric signal.

LCD unit 30 includes a display memory 34 and an LCD controller 32. It is noted that the LCD corresponds to the main display portion 2a, and on LCD unit 30, image data is displayed. In place of LCD, an organic EL (Electro Luminescence) display may be used.

Display memory 34 stores image data to be displayed on the LCD. It is implemented, for example, by a VRAM (Video RAM).

LCD control unit 32 controls display of image data stored in display memory 34 on the LCD.

Memory 26 for finder display image stores the image to be displayed on the finder, output from camera sensor 24.

Memory 28 for temporarily storing picked-up images stores the picked-up image output from camera sensor 24, when the shutter is operated through key operation portion 54.

The camera driver performs output of the image to be displayed on the finder when finder display is to be given, switching of image pick-up mode in accordance with an instruction for switching the image pick-up mode from key operation portion 54, output of picked-up image when the shutter is operated, and so on.

Next, the scanning direction for reading digital images from camera sensor 24 and the scanning direction for displaying an image on the LCD will be described.

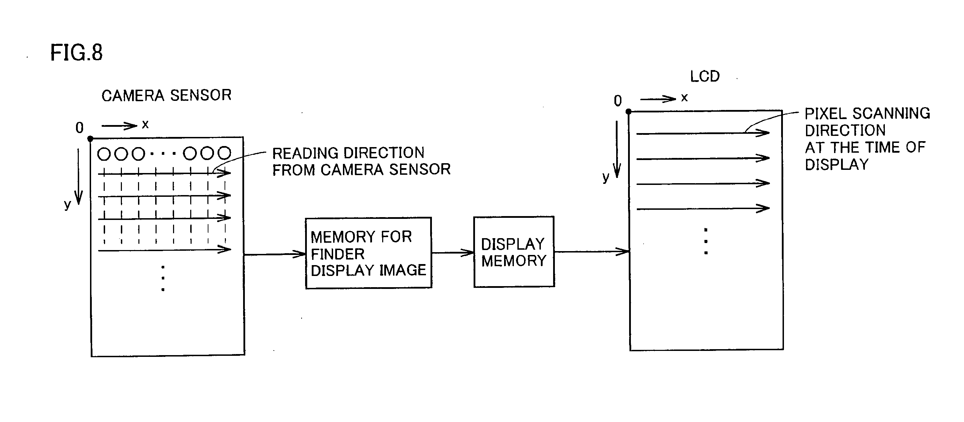

Fig. 8 illustrates scanning direction for reading a digital image from a camera sensor 24 and scanning direction for displaying an image on an LCD.

As shown in Fig. 8, in camera sensor 24, photo-electric converting elements are arranged in a matrix of rows and columns. Here, let us assume the upper left corner of the matrix of photo-electric converting elements to be the origin, the horizontal direction to be the x-axis and the vertical direction to be the y-axis. Then, the data of photo-electric converting elements are read from the origin in the direction of the x-axis, as represented by an arrow 80. When reading in the direction of x-axis ends, the reading is shifted along the y-axis and data are again read in the direction of the x-axis.

The image data read in this manner are passed through memory 26 for finder display image and display memory 34, and displayed on the LCD.

On the LCD, the direction of scanning the pixels when it is driven for display is determined, for example, as represented by an arrow 82. The image data read from camera sensor 24 are displayed on the LCD along the scanning direction.

Returning to Fig. 7, image processing controller 50 reads image data of memory 26 for finder display image or memory 28 for temporarily storing picked-up images, performs processes such as enlargement, reduction and rotation, and outputs the result to the same memory area or a different memory area. It also performs image compression process when the image is stored after a shutter operation. By way of example, a BMP (Bitmap) file stored in the memory for temporarily storing picked-up images is converted to a JPEG (Joint Photographic Experts Group) file. Further, when the image pick-up mode is the landscape image pick-up mode, image processing controller 50 performs a process of extracting an image having the aspect ratio of shorter side to longer side (landscape display), from the image read from memory 26 for finder display image.

Internal memory 40 includes first, second and third internal memories 42, 44 and 46.

The first internal memory 42 stores image data as the result of rotation process performed by image processing controller 50 on the image read from the memory for finder display image.

The second internal memory 44 stores image data as the result of enlargement or reduction process performed by image processing controller 50 on the image read from the memory for finder display image.

The third internal memory 46 stores image data as the result of compression process performed by image processing controller 50 on the image read from the memory for finder display image.

File registration control application 58 receives an instruction from camera control application portion 52 receiving a storage instruction through key operation portion 54, and performs a process for storing the image data of the third internal memory to flash memory 60 for storing files.

Flash memory 60 for storing files is a non-volatile storage for storing files. An external storage may be used, in accordance with an instruction from an application.

Next, the flow of image data in portable information terminal having the above-described functional configuration will be described with reference to Fig. 7. In the following description, main display unit 2a will be referred to as a display panel.

### (1. Display panel: portrait orientation/image pick-up mode: picked-up in portrait image pick-up mode)

The data flow when the display panel is in the portrait orientation and the image is picked-up in portrait image pick-up mode is as follows.

The optical data received by camera light receiver 22 is converted to digital image data at camera sensor 24. The converted digital image data is output from camera sensor 24 and stored in memory 26 for finder display image. Further, the digital image data stored in memory 26 for finder display image is transmitted to display memory 34 of LCD unit 30, and an image based on the data is displayed on the LCD controller 32.

### (2. Display panel: portrait orientation/image pick-up mode: picked-up in landscape image pick-up mode)

The data flow when the display panel is in the portrait orientation and the image is picked-up in landscape image pick-up mode is as follows.

The optical data received by camera light receiver 22 is converted to digital image data at camera sensor 24. The converted digital image data is output from camera sensor 24 and stored in memory 26 for finder display image. Further, from the digital image data stored in memory 26 for finder display image, an image is extracted to have the aspect ratio of shorter side to longer side of the display panel for landscape display, by image processing controller 50. The extracted image data is transmitted to display memory 34 of LCD unit 30, and an image based on the data is displayed by the LCD controller 32. The process of extracting the image having the image pick-up mode for landscape display from the digital image data may be executed by the camera driver, when the image data from the camera sensor is stored in memory 26 for finder display image. In that case, the image data extracted by the camera driver is stored from memory 26 for finder display image to display memory 34.

### (3. Display panel: landscape orientation/image pick-up mode: picked-up in portrait image pick-up mode)

The data flow when the display panel is in the landscape orientation and the image is picked-up in portrait image pick-up mode is as follows.

The optical data received by camera light receiver 22 is converted to digital image data at camera sensor 24. The converted digital image data is output from camera sensor 24 and stored in memory 26 for finder display image. Thereafter, the digital image data stored in memory 26 for finder display image is rotated by image processing controller 50, and the result is stored in the first internal memory 42. Next, the image data stored in the first internal memory 42 is reduced by image processing controller 50 such that the longer side of the image becomes equal to the shorter side of the display panel, and the result is stored in the second internal memory 44. Then, the data is transmitted from the second internal memory 44 to the display memory 34 of LCD unit 30, and an image is displayed by the LCD controller 32.

### (4. Display panel: landscape orientation/image pick-up mode: picked-up in landscape image pick-up mode)

The data flow when the display panel is in the landscape orientation and the image is picked-up in landscape image pick-up mode is as follows.

The optical data received by camera light receiver 22 is converted to digital image data at camera sensor 24. The converted digital image data is output from camera sensor 24 and stored in memory 26 for finder display image. Further, from the digital image data stored in memory 26 for finder display image, an image is extracted to have the aspect ratio of shorter side to longer side of the display panel for landscape display and rotated by image processing controller 50. The rotated image data is stored in the first internal memory 42. Thereafter, the image data stored in the first internal memory 42 is enlarged by image processing controller 50 such that the longer side of the image becomes equal to the longer side of the display panel, and the result is stored in the second internal memory 44. Then, the data is transmitted from the second internal memory 44 to the display memory 34 of LCD unit 30, and an image is displayed by the LCD controller 32.

### (5. When shutter is operated)

The data flow when the shutter is operated is as follows.

The optical data received by camera light receiver 22 is converted to digital image data at camera sensor 24. The converted digital image data is output from camera sensor 24 and stored in memory 28 for temporarily storing picked-up images. Then, the digital image data stored in memory 28 for temporarily storing picked-up images is compressed by image processing controller 50, and stored in the third internal memory 46. The compressed image data stored in the third internal memory 46 is further transmitted, in accordance with an instruction from file registration control application 58, to flash memory 60 for storing files.

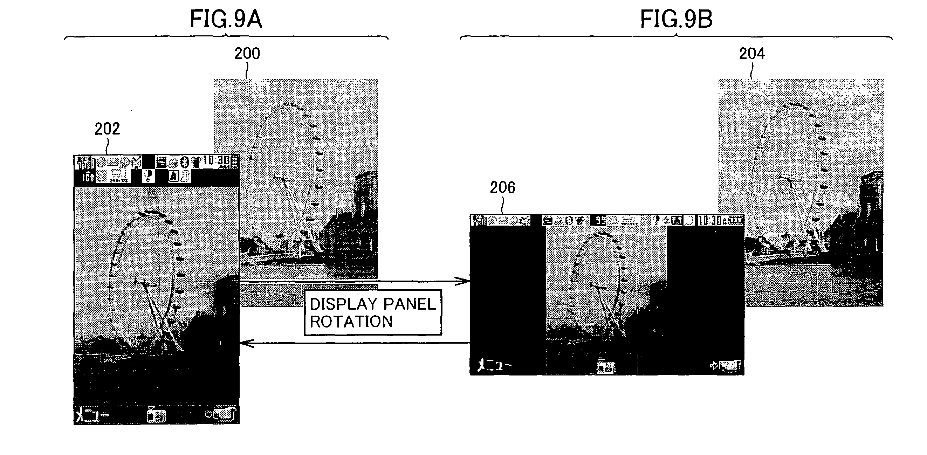

Specific examples of images displayed on the display panel as described above will be given in the following. Figs. 9A and 9B illustrate transition of a displayed image when the display panel is rotated with the pick-up mode set in portrait image pick-up mode. Fig. 9A represents an example of the displayed image when the display panel is in the portrait orientation, and Fig. 9B shows an example of the displayed image when the display panel is in the landscape orientation.

As shown in Fig. 9A, when the display panel is in the portrait orientation, an image 200 picked-up by camera sensor 24 is displayed as an image 202 on the display panel (LCD). After the display panel is rotated to the landscape orientation, the image 204 picked-up by camera sensor 24 is displayed as image 206 on the display panel, as shown in Fig. 9B.

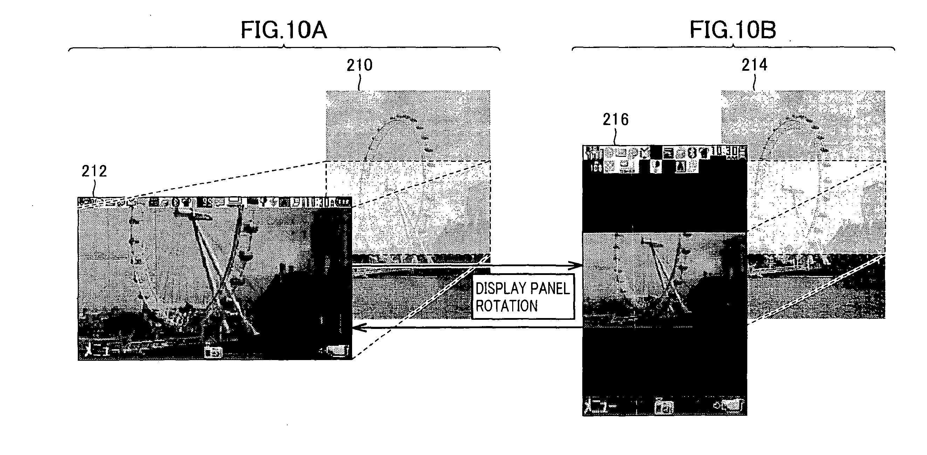

Figs. 10A and 10B illustrate transition of a displayed image when the display panel is rotated with the pick-up mode set in landscape image pick-up mode. Fig. 10A shows an image 212 on the display panel set in the landscape orientation, and Fig. 10B shows an image 216 on the display panel set in the portrait orientation.

As shown in Fig. 10A, when the display panel is in the portrait orientation, image 210 picked-up by camera sensor 24 is extracted as an image having the aspect ratio of shorter side to longer side (landscape display), and further subjected to rotation and enlargement, whereby it is displayed as image 212 on the display panel. As shown in Fig. 10B, when the display panel is rotated and in the portrait orientation, an image is extracted to have the aspect ratio of shorter side to longer side from image 214 picked-up by camera sensor 24, and the resulting image is displayed as image 216.

Next, the process flow in portable information terminal 1 above will be described. By the process described in the following, it is possible by portable information terminal 1 to display the image with the aspect ratio maintained, even when the display panel is rotated.

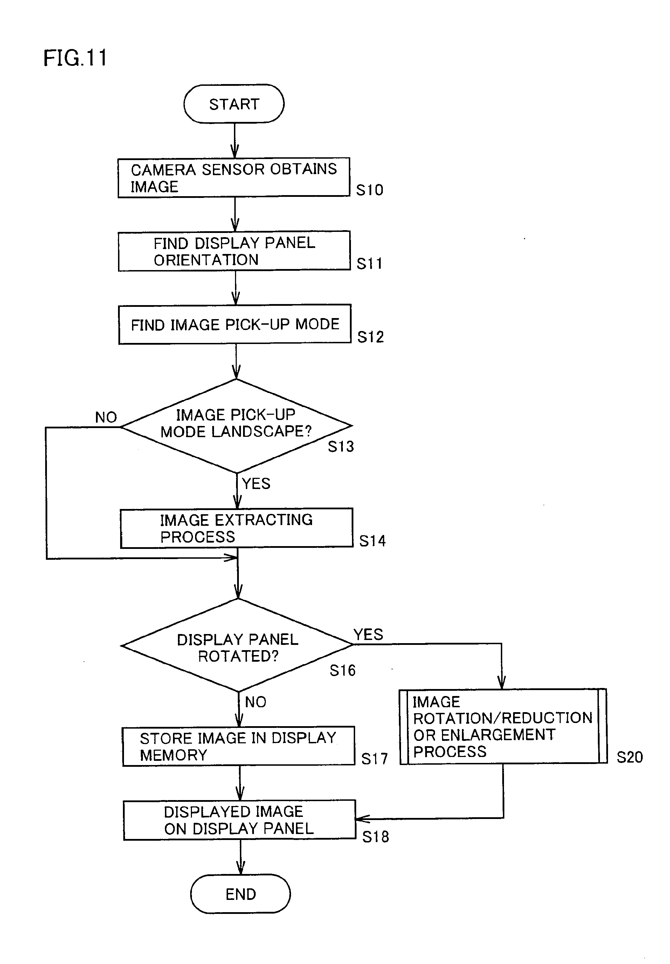

Fig. 11 is a flowchart representing the flow of an image display process in portable information terminal 1.

Referring to Fig. 11, at step S10, camera sensor 24 obtains optical data received by camera light receiver 22, and converts the data to digital image data. Then, the digital image data is stored in memory 26 for finder display image.

Next, at step S 11, camera control application portion 52 finds, from display panel rotation sensor 56, whether the display panel is in the portrait orientation or landscape orientation.

Thereafter, at step S 12, camera control application portion 52 finds whether the image pick-up mode given through key operation portion 54 is the portrait image pick-up mode or landscape image pick-up mode.

Then, at step S13, camera control application portion 52 determines whether the image pick-up mode is the landscape image pick-up mode or not. If the image pick-up mode is determined to be the landscape mode (YES at step S 13), image processing controller 50 performs, at step S 14, the process of extracting an image for landscape display, from the image in memory 26 for finder display image.

If the image pick-up mode is determined not to be the landscape mode (NO at step S 13), the process proceeds to step S16.

At step S16, camera control application portion 52 determines whether the display panel has been rotated or not. If it is determined that the display panel has been rotated (display panel is in the landscape orientation) (YES at step S 14), camera control application unit 52 performs the process of "image rotation/reduction or enlargement" at step S20, and then, the process proceeds to step S18. The process at step S20 will be described later.

If it is determined that the display panel has not been rotated (display panel is in the portrait orientation) (NO at step S16), camera control application portion 52 issues an instruction at step S 17 that the image data of memory 26 for finder display image (when the image pick-up mode is the portrait image pick-up mode) or the image data extracted by image processing controller 50 (when the image pick-up mode is the landscape image pick-up mode) should be stored in display memory 34.

Finally, at step S18, LCD controller 32 displays the digital image data stored in display memory 34 on the display panel.

In the above-described manner, portable information terminal 1 realizes image display process with the aspect ratio maintained. This operation is performed every time the camera picks up an image. By way of example, it is executed at every 10 to 30 fps.

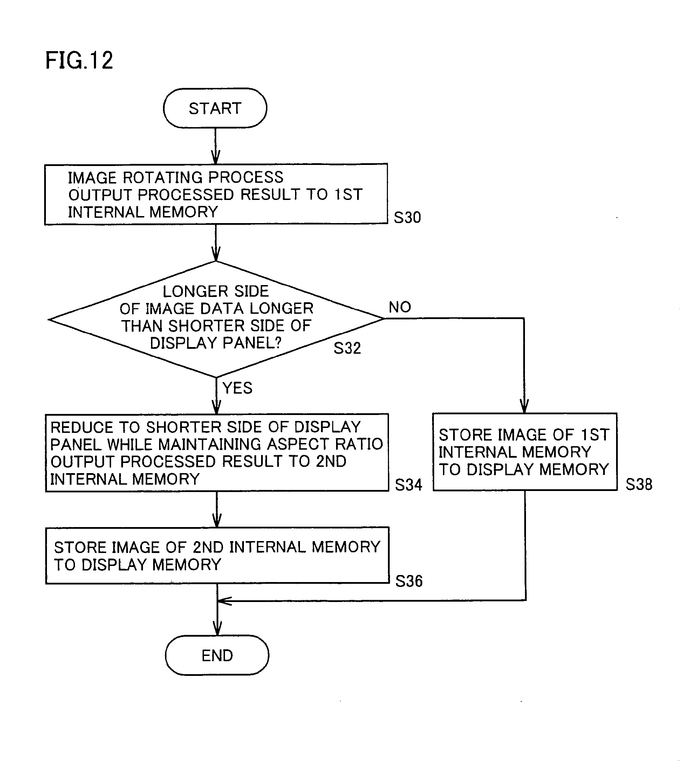

Next, referring to Fig. 12, the process of "image rotation/reduction or enlargement" at step S20 of Fig. 11 will be described. Fig. 12 is a flowchart representing the flow of image rotation/reduction or enlargement process.

At step S30, image processing controller 50 obtains the image data of memory 26 for finder display image or the image data extracted by image processing controller 50, and rotates the image data. Then, image processing controller 50 stores the rotated image data in the first internal memory 42.

Then, at step S32, camera control application portion 52 determines whether the longer side of image data stored in the first internal memory is longer than the shorter side of the display panel or not. If it is determined that the longer side of image data is longer than the shorter side of the display panel (YES at step S32), camera control application portion 52 instructs image processing controller 50 to perform the image reduction process to match the shorter side of the display panel, while maintaining the aspect ratio of the image pick-up mode. In response to the instruction, image processing controller 50 stores the reduced image data to the second internal memory 44.

Next, at step S36, camera control application portion 52 stores the image of the second internal memory 44 in display memory 34.

If it is determined that the longer side of the image data is shorter than the shorter side of the display panel (NO at step S32), camera control application portion 52 transfers the image data of the first internal memory to display memory 34 at step S38. Alternatively, camera control application portion 52 may enlarge the image to the size of the display panel while maintaining the aspect ratio and transfer the result directly to the display memory, or may store the enlarged image in the second internal memory 44. In that case, the image data in the second internal memory is stored in the display memory 34. The process of step S20 of Fig. 11 is performed in this manner.

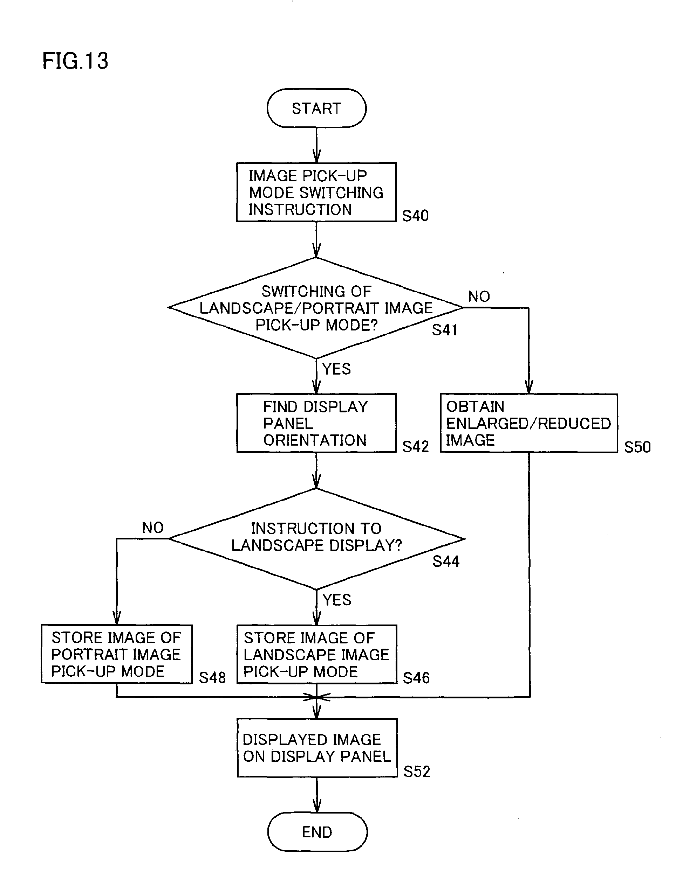

Next, referring to Fig. 13, the process when an instruction is given to switch image pick-up mode through key operation portion 54 will be described. The switching of image pick-up mode involves not only the switching between the portrait and landscape image pick-up modes but also switching of the size (enlargement/reduction) of the image to be displayed on the display panel while maintaining the aspect ratio.

Fig. 13 is a flowchart representing the process flow when an instruction to change image pick-up mode is applied.

Referring to Fig. 13, at step S40, camera control application portion 52 receives from key operation portion 54 the instruction to switch image pick-up mode.

At step S41, camera control application portion 52 determines whether there is an instruction from key operation portion 54 to switch the image pick-up mode from the portrait to landscape or landscape to portrait image pick-up mode. If it is determined by camera control application portion 52 that there is no instruction of switching between portrait and landscape modes (NO at step S41), image processing controller 50 enlarges or reduces the image of memory 26 for finder display image in accordance with the image pick-up mode switching instruction, at step S50. The enlarged/reduced image data is stored in the second internal memory 44, and then, transmitted from the second internal memory to display memory 34.

On the other hand, if it is determined by camera control application portion 52 that there is an instruction of switching between portrait and landscape modes (YES at step S41), camera control application portion 52 obtains the orientation of the display panel from display panel rotation sensor 56 at step S42.

Next, at step S44, camera control application portion 52 determines whether the instruction is to switch to the landscape display or not. If it is determined to be the instruction to switch to the landscape display (YES at step S44), camera control application portion 52 stores the image in landscape display in display memory 34 at step S46. The procedure for storing the image in landscape display in display memory 34 is the same as that described with reference to Fig. 11 and, therefore, description thereof will not be repeated.

If it is determined not to be the instruction to switch to the landscape display (NO at step S44), camera control application portion 52 stores the image in portrait display in display memory 34 at step S48. The procedure for storing the image in portrait display in display memory 34 is the same as that described with reference to Fig. 11 and, therefore, description thereof will not be repeated.

Finally, at step S52, LCD controller 32 displays the digital image data stored in display memory 34 on the display panel.

In this manner, the process when an instruction is given to switch the image pick-up mode is executed.

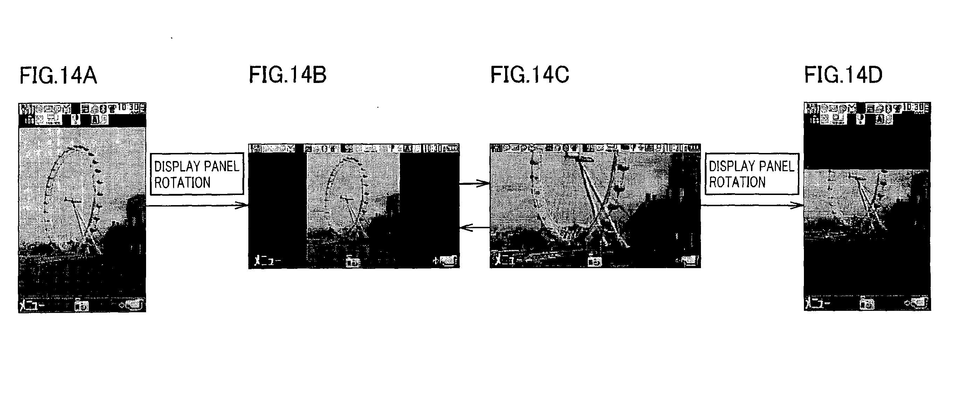

Figs. 14A to 14D show an exemplary transition of the displayed image. Referring to Figs. 14A to 14D, the process above performed by portable information terminal 1 in accordance with the present embodiment will be described.

Fig. 14A shows a displayed image in which the subject is in portrait display, on the display panel in portrait orientation. Here, assume that the user of portable information terminal 1 rotates the display panel while maintaining the portrait display. Then, as shown in Fig. 14B, the image is displayed in portrait display, with the display panel set in landscape orientation. When the user presses the image pick-up mode switching key, the image is extracted and shown in landscape display, with the display panel being in the landscape orientation as shown in Fig. 14C. When the user presses the image pick-up mode switching key, it is also possible to switch the landscape display of Fig. 14C to the portrait display of Fig. 14B. When the display panel is rotated with the landscape display maintained, the image appears in landscape display with the display panel being in the portrait orientation, as shown in Fig. 14D.

When the image is shown in portrait display with the display panel being in portrait orientation (Fig. 14A), it is possible to switch to the landscape display (Fig. 14D) by the user pressing the image pick-up mode switching key. Similarly, it is possible for the user to switch from the state of Fig. 14D to Fig. 14A.

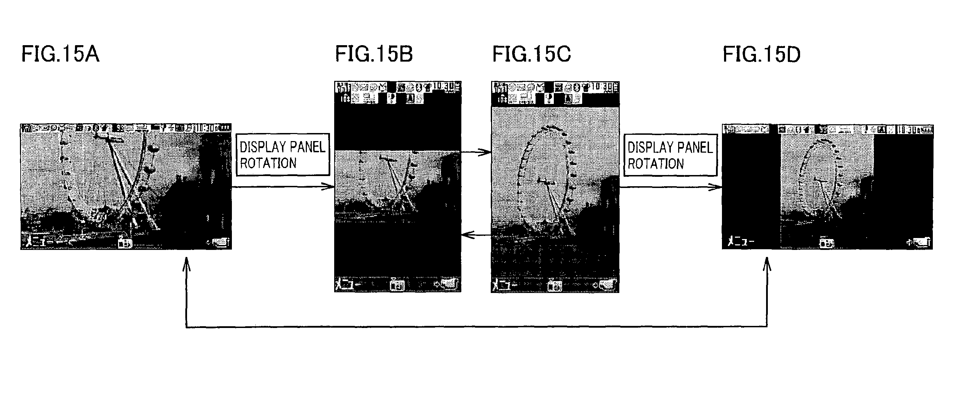

Figs. 15A to 15D show another exemplary transition of the displayed image different from that of Figs. 14A to 14D. Referring to Figs. 15A to 15D, a specific example different from that of Figs. 14A to 14D of the process performed by portable information terminal 1 in accordance with the present embodiment will be described.

Fig. 15A shows a displayed image in which the subject is in landscape display, on the display panel in landscape orientation. When the user rotates the display panel while maintaining the landscape display, the image comes to be shown in landscape display on the display panel in portrait orientation. When the user further presses the image pick-up mode switching key, the image comes to be shown in portrait display on the display panel in portrait orientation, as shown in Fig. 15C. When the user presses the image pick-up mode switching key, it is also possible to switch the portrait display of Fig. 15C to the landscape display of Fig. 15B. When the user rotates the display panel while maintaining the landscape display, the image is shown in portrait display with the display panel being in landscape orientation.

When the image is shown in landscape display with the display panel being in landscape orientation (Fig. 15A), it is possible to switch to the portrait display (Fig. 15D) by the user pressing the image pick-up mode switching key. Similarly, it is possible for the user to switch from the state of Fig. 15D to Fig. 15A.

As described above, in the portable information terminal in accordance with the present embodiment, when the display panel is in at least one of the portrait orientation and landscape orientation, the image pick-up mode of the image on the display panel can be changed by a key operation. Thus, it is possible for the user to easily confirm image angle in the portrait and landscape displays at the present distance to the subject, without the necessity of rotating the display panel.

Further, in the portable information terminal in accordance with the present embodiment, an image can be shown in landscape display on the display panel without performing the enlargement process. Therefore, as compared with the image shown in landscape display with the display panel being in landscape orientation, image resolution can be improved.

Although the present invention has been described and illustrated in detail, it is clearly understood that the same is by way of illustration and example only and is not to be taken by way of limitation, the scope of the present invention being interpreted by the terms of the appended claims.

## Claims

1. A portable information terminal (1), comprising:
an image pick-up portion (10);
a first housing (5) on which said image pick-up portion is provided;
a display portion (2a) configured to display an image being picked-up by said image pick-up portion;
a second housing (2) on which said display portion is provided;
an image processing controller (50) configured to display said image on a display screen of said display portion; and
a display switching portion (52) configured to give an instruction to said image processing controller that in a display area on which said image is displayed of said display screen, said image is displayed with a first aspect ratio or with a second aspect ratio different from said first aspect ratio; wherein
said image processing controller (50) changes the image pick-up mode of said image to attain said first aspect ratio or said second aspect ratio, in accordance with an instruction to change the aspect ratio from said display switching portion.

2. The portable information terminal according to claim 1, further comprising a joint portion (3) configured to join said first housing and said second housing to be opened/closed with each other; wherein
said joint portion (3) includes a rotating portion (3a) configured to allow said second housing to rotate in a plane vertical to an axis for said opening/closing and horizontal to said display screen, so that said display screen can be set to portrait and landscape orientations; and
said image processing controller (50) changes said image pick-up mode to attain said first aspect ratio or said second aspect ratio with said display screen being in at least one of said portrait orientation and said landscape orientation.

3. The portable information terminal according to claim 2, wherein
said first aspect ratio is the aspect ratio of said display screen when said display screen is in the portrait orientation; and
said second aspect ratio is the aspect ratio of said display screen when said display screen is in the landscape orientation.

4. The portable information terminal according to claim 1, further comprising
a call processing controller (64) configured to realize a call in accordance with an external instruction.

5. The portable information terminal according to claim 1, further comprising
a detecting portion (56) configured to detect transition of said display area from one to the other of the portrait orientation and landscape orientation; wherein
said image processing controller (50) rotates said image in response to said detecting portion detecting said transition, and changes display size of said rotated image to attain said aspect ratio displayed on said display area before said transition.

6. The portable information terminal according to claim 5, wherein
said image processing controller determines a range of said image to be displayed on said display area either to a range that attains said first aspect ratio or a range that attains said second aspect ratio.
